# FASCICULE DE BREVET EUROPEEN

(11) **EP 0 605 266 B1**
(45) Date de publication et mention de la délivrance du brevet: **12.03.1997**
(21) Numéro de dépôt: 93402878.8
(22) Date de dépôt: 29.11.1993
(51) Int. Cl.: H01R 25/16

(54) **Support d'appareillage à rapporter sur le corps d'une goulotte à retours dirigés l'un vers l'autre**
Geräteträger anzubringen auf einen Kabelkanal mit einander gegenüberliegenden Vorsprüngen
Support for an apparatus to be mounted on a duct with flages facing each other

(30) Priorité: 01.12.1992 FR 9214441
(43) Date de publication de la demande: 06.07.1994
(73) Titulaire: LEGRAND, F-87045 Limoges Cédex (FR)
(72) Inventeur: Decore, Bertrand, F-72650 La Chapelle Saint Aubin (FR); Perrignon de Troyes, François, F-72000 Le Mans (FR)
(74) Mandataire: CABINET BONNET-THIRION

(56) Documents cités:
- EP-A- 0 222 116
- FR-A- 2 584 243
- FR-A- 2 668 863

## Description

La présente invention concerne d'une manière générale les supports mis en oeuvre pour le montage d'un quelconque appareillage, et par exemple d'un quelconque appareillage électrique, sur le corps d'une goulotte présentant deux retours dirigés l'un vers l'autre le long du bord libre de ses ailes latérales.

Ces retours, qui sont le plus souvent conformés en gouttière, sont normalement prévus pour assurer l'encliquetage d'un couvercle.

Mais il peut également en être tiré profit pour la mise en place, localement, d'un support d'appareillage, en substitution à un tel couvercle.

En pratique, un tel support d'appareillage comporte, à cet effet, à ce jour, sur deux côtés opposés, des moyens de rainure propres à son engagement sur de tels retours.

Conjointement, il comporte, sur ses deux autres côtés, des languettes, destinées à s'engager sous le couvercle adjacent, pour assurer à ce niveau toute l'étanchéité souhaitable.

Les supports d'appareillage de ce type donnent globalement satisfaction.

Mais ils présentent des inconvénients, qui sont les suivants.

Tout d'abord, leur implantation sur le corps d'une goulotte ne peut se faire que par leurs côtés dotés de moyens de rainure.

Il en résulte qu'ils ne correspondent qu'à une largeur de goulotte, ou, plus précisément, qu'à une largeur de couvercle, cette largeur étant par exemple définie comme étant la distance séparant l'un de l'autre les deux retours sur lesquels ils peuvent être engagés.

Or il existe des goulottes à largeurs de couvercle différentes.

Il faut donc à ce jour autant de supports d'appareillage de types différents qu'il y a ainsi de largeurs de couvercle différentes, au prix d'une multiplication des références correspondantes, et donc des coûts.

En outre, perpendiculairement aux retours sur lesquels ils sont engagés, les supports d'appareillage du genre concerné connus à ce jour disposent d'un certain jeu par rapport à ces retours, dans les limites des moyens de rainure par lesquels ils sont en prise avec ceux-ci, au détriment de l'esthétique, s'ils viennent à se mettre de guingois, de l'étanchéité, s'ils laissent un jour entre eux et les retours avec lesquels ils sont en prise, et, finalement, de leur propre stabilité sur la goulotte qu'ils équipent, et, par là, de la perception que peut avoir de l'ensemble l'usager.

Enfin, mis au mieux bord à bord avec le couvercle auquel ils sont localement substitués, ils laissent à vue l'extrémité correspondante de ce couvercle, au détriment, encore, de l'esthétique, si la coupe de celui-ci est imparfaite.

La présente invention a d'une manière générale pour objet des dispositions permettant de limiter, sinon éviter, ces inconvénients.

De manière plus précise, elle a pour objet un support d'appareillage à rapporter sur le corps d'une goulotte à retours dirigés l'un vers l'autre, qui est du genre comportant, sur deux côtés opposés, des moyens de rainure propres à son engagement sur de tels retours, et qui, suivant une première disposition, est d'une manière générale caractérisé en ce qu'il comporte des moyens de rainure propres à un tel engagement sur deux autres côtés qui, alternant avec les précédents, sont agencés en rectangle avec ceux-ci.

Ainsi, le support d'appareillage suivant l'invention peut indifféremment être monté sur le corps d'une goulotte suivant l'une ou l'autre de deux orientations orthogonales, l'une correspondant à une première largeur de couvercle, l'autre correspondant à une deuxième largeur de couvercle différente de la précédente.

Le nombre de références à prévoir pour satisfaire l'ensemble des cas envisageables se trouve ainsi avantageusement divisé par deux.

Suivant une deuxième disposition, le support d'appareillage suivant l'invention est encore caractérisé en ce que, sur l'un au moins de ses côtés, et en pratique sur chacun de ceux-ci, il est prévu, dans les moyens de rainure correspondants, en saillie en direction de l'autre sur l'une au moins des joues définissant ces moyens de rainure, au moins une lamelle élastiquement déformable.

Sous la sollicitation de cette lamelle élastiquement déformable, le support d'appareillage suivant l'invention se trouve plaqué contre les retours sur lesquels il est engagé, au bénéfice de l'esthétique, de l'étanchéité, et de sa stabilité.

Enfin, suivant une troisième disposition, le support d'appareillage suivant l'invention est encore caractérisé en ce qu'il lui est associé un enjoliveur dont les dimensions extérieures sont supérieures à ses propres dimensions.

Par exemple, cet enjoliveur est amovible, et il peut être rapporté de l'avant sur le support d'appareillage suivant l'invention, par simple encliquetage.

En variante, il est d'un seul tenant avec ce support d'appareillage.

Quoi qu'il en soit, cet enjoliveur est à même de déborder sur le couvercle adjacent, en masquant, au bénéfice de l'esthétique, l'extrémité correspondante de celui-ci et ses éventuels défauts de coupe.

Les caractéristiques et avantages de l'invention ressortiront d'ailleurs de la description qui va suivre, à titre d'exemple, en référence aux dessins schématiques annexés sur lesquels :
la figure 1 est une vue en perspective d'une goulotte sur le corps de laquelle est rapporté un support d'appareillage suivant l'invention ;
la figure 2 est une vue en perspective, qui reprend celle de la figure 1, et sur laquelle l'enjoliveur associé au support d'appareillage suivant l'invention a été représenté de manière éclatée ;
la figure 3 est, à échelle supérieure, une vue en perspective du support d'appareillage suivant l'invention, représenté isolément ;
la figure 4 est, à l'échelle de la figure 3, et en correspondance avec celle-ci, une vue en perspective de l'enjoliveur associé à ce support d'appareillage ;
la figure 5 est une vue en élévation, vu de l'arrière, suivant la flèche V de la figure 3, du support d'appareillage suivant l'invention ;
les figures 6 et 7 en sont des vues partielles en coupe transversale, suivant, chacune respectivement, la ligne brisée VI-VI de la figure 5 et la ligne droite VII-VII de cette figure 5 ;
la figure 8 est une vue en élévation, vu de l'arrière, suivant la flèche VIII de la figure 3, de l'enjoliveur associé au support d'appareillage suivant l'invention ;
la figure 9 est, à échelle supérieure, une vue partielle en coupe transversale de cet enjoliveur, suivant la ligne IX-IX de la figure 8.

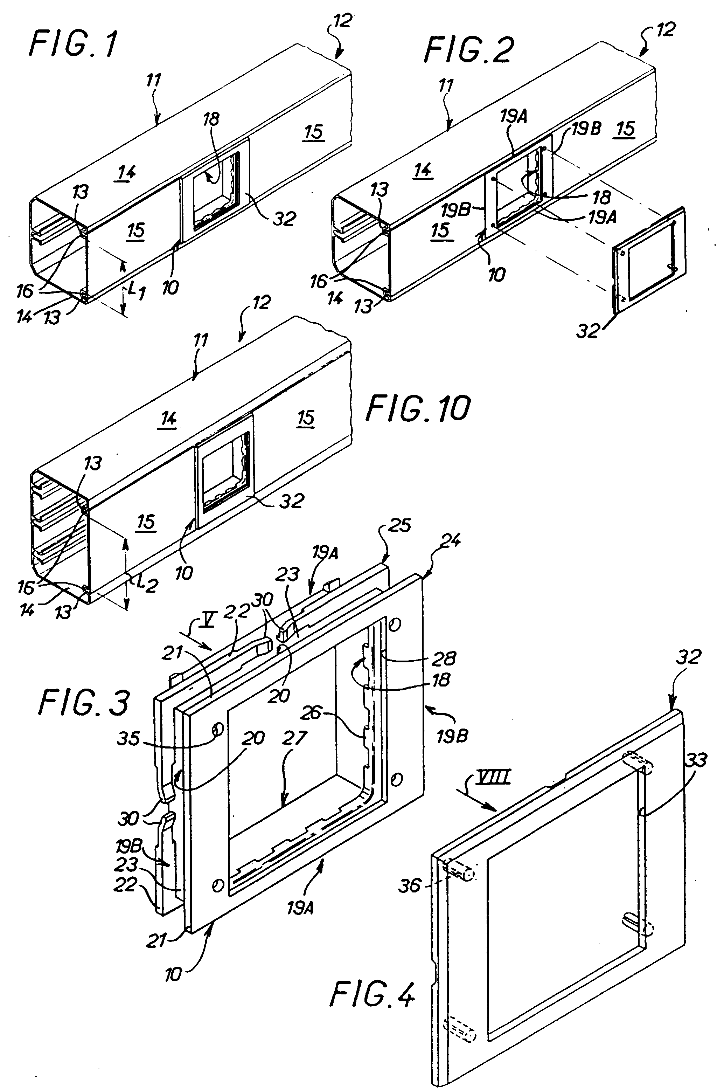

Tel qu'illustré sur ces figures, et plus particulièrement sur les figures 1 et 2, le support d'appareillage 10 suivant l'invention est destiné à être rapporté sur le corps 11 d'une goulotte 12 présentant deux retours 13 dirigés l'un vers l'autre le long du bord libre de ses ailes latérales 14.

Un tel corps de goulotte 11 étant bien connu par lui-même et ne relevant pas de la présente invention, il ne sera pas décrit dans tous ses détails ici.

Il en est de même en ce qui concerne le couvercle 15 qui, adapté à le fermer, forme avec lui la goulotte 12.

Il suffira d'indiquer que, dans la forme de réalisation représentée, les retours 13 du corps de goulotte 11 sont globalement conformés en gouttière, et qu'ils sont ainsi propres à l'encliquetage de cordons 16 prévus à cet effet en saillie au dos du couvercle 15.

Soit L1, figures 1 et 2, ou L2, figure 10, la largeur du couvercle 15, mesurée, par exemple, de l'un à l'autre des retours 13 du corps de goulotte 11.

Cette largeur de couvercle peut varier d'une goulotte 12 à une autre.

De fait, dans les formes de réalisation représentées, L2 est différent de L1, et, en pratique est supérieur à L1.

De manière connue en soi, le couvercle 15 est interrompu localement pour la mise en place du support d'appareillage 10 et ce dernier se substitue localement à lui.

Dans sa zone médiane, le support d'appareillage 10 présente une ouverture centrale 18 pour la réception d'un quelconque appareillage non représenté.

Cet appareillage est, par exemple, un appareillage électrique, tel que socle de prise de courant ou autre.

Dans la forme de réalisation représentée, le contour de l'ouverture centrale 18 du support d'appareillage 10 est carré, mais, pour des raisons qui apparaîtront ultérieurement, le support d'appareillage 10 suivant l'invention a lui-même extérieurement un contour globalement rectangulaire.

Le support d'appareillage 10 suivant l'invention comporte ainsi deux côtés de plus grande longueur 19A, et, en alternance avec ceux-ci, deux côtés de plus petite longueur 19B.

De manière connue en soi, et suivant des dispositions décrites plus en détail ultérieurement, ce support d'appareillage 10 comporte, sur deux côtés opposés, par exemple ses côtés 19A, des moyens de rainure 20 propres à son engagement sur les retours 13 d'un corps de goulotte 11.

Suivant l'invention, le support d'appareillage 10 comporte également des moyens de rainure 20 propres à un tel engagement sur ses deux autres côtés, c'est-à-dire sur les deux côtés 19B qui, alternant avec les côtés 19A précédents, sont agencés en rectangle avec ceux-ci.

Sur chacun des côtés 19A, 19B, les moyens de rainure 20 se trouvent définis, dans la forme de réalisation représentée, d'une part, par deux joues 21, 22 globalement parallèles, et, d'autre part, par un fond 23.

L'une au moins des joues 21, 22, et, en pratique, il s'agit de la joue 21 la plus extérieure, s'étend sur toute la longueur des côtés 19A, 19B et elle appartient en continu à un cadre plat 24, de contour extérieur rectangulaire, qui est commun à l'ensemble, et qui, dans la forme de réalisation représentée, forme un cadre de façade pour le support d'appareillage 10.

L'autre joue, et il s'agit donc en l'espèce de la joue 22 la plus intérieure, est fractionnée, dans la forme de réalisation représentée, pour des raisons qui apparaîtront ultérieurement, en au moins deux tronçons, qui, disposés chacun respectivement aux extrémités de chacun des côtés 19A, 19B concernés, se raccordent chacun respectivement en continu aux tronçons correspondants des côtés 19B, 19A adjacents.

Autrement dit, pour chacun des côtés 19A, 19B, la joue 22 la plus intérieure est localement interrompue dans sa zone médiane.

Mais, abstraction faite de cette interruption, cette joue 22 la plus intérieure, comme la joue 21 la plus extérieure, appartient en continu à un cadre plat 25, de contour extérieur rectangulaire, qui, commun à l'ensemble, s'étend parallèlement au cadre plat 24 précédent, à l'arrière de celui-ci.

Extérieurement, le cadre plat 25 a des dimensions légèrement inférieures à celles du cadre plat 24.

L'ouverture centrale 18 se trouve par ailleurs définie par un rebord 26 qui, dirigé vers l'arrière, double, intérieurement, à distance, et sur une partie seulement de sa hauteur, un cadre tubulaire 27, de section transversale carrée, issu du cadre plat 24 le long du contour intérieur 28 de celui-ci.

Le contour intérieur 28, carré, du cadre plat 24, est donc décalé vers l'extérieur par rapport à celui de l'ouverture centrale 18.

Pour le positionnement d'un appareillage venant s'encliqueter sur le rebord 26, la tranche de ce rebord 26 est crénelée.

Sur les côtés de plus grande longueur 19A, le fond 23 des moyens de rainure 20 est formé directement par les côtés correspondants du cadre tubulaire 27.

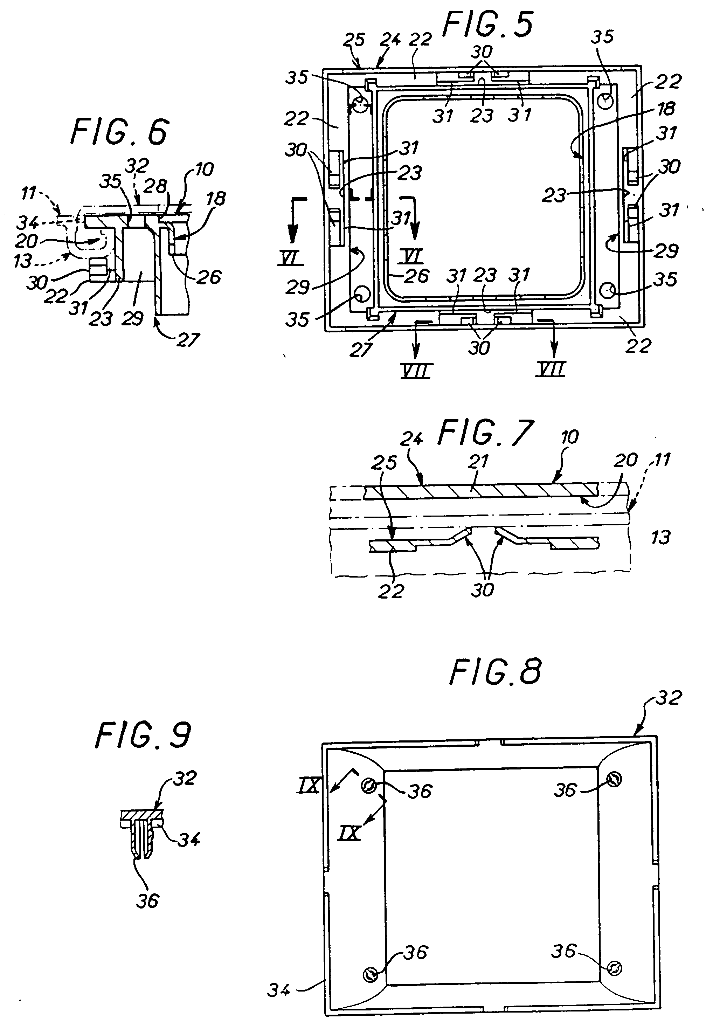

Sur les côtés de plus petite longueur 19B, ce fond 23 est au contraire distinct des côtés correspondants du cadre tubulaire 27, en ménageant avec ceux-ci, au dos du cadre plat 24, des évidements 29, figures 5 et 6.

Sur l'un au moins des côtés 19A, 19B, et en pratique sur chacun de ceux-ci, il est préférentiellement prévu, et c'est le cas dans la forme de réalisation représentée, dans les moyens de rainure 20, en saillie en direction de l'autre sur l'une au moins des joues 21, 22 définissant ces moyens de rainure 20, au moins une lamelle élastiquement déformable 30.

Dans la forme de réalisation représentée, cette lamelle élastiquement déformable 30 est allongée longitudinalement par rapport aux joues 21, 22.

Autrement dit, elle s'étend parallèlement au fond 23 des moyens de rainure 20.

En pratique, cette lamelle élastiquement déformable 30 vient d'un seul tenant d'un des tronçons de la joue 22 la plus intérieure en formant un prolongement de celui-ci, et il lui est associé, venant d'un seul tenant de l'autre de ces tronçons, une autre lamelle élastiquement déformable 30 de même type mais de sens opposé.

D'abord directement dans le prolongement des tronçons de la joue 22 la plus intérieure, ces lamelles élastiquement déformables 30 se redressent ensuite en oblique en direction de la joue 21 la plus extérieure, en se rapprochant conjointement l'une de l'autre, symétriquement l'une de l'autre par rapport à un plan transversal médian commun à l'ensemble et passant dans leur intervalle.

Dans la forme de réalisation représentée, les lamelles élastiquement déformables 30 sont chacune individuellement séparées du fond 23 des moyens de rainure 20 par une fente 31.

Suivant l'invention, enfin, il est associé au support d'appareillage 10 un enjoliveur 32 dont les dimensions extérieures sont supérieures aux siennes.

Par exemple, et tel que représenté, cet enjoliveur 32 forme une pièce distincte du support d'appareillage 10 et il peut être rapporté de l'avant sur celui-ci, en pratique par simple encliquetage.

Il est ainsi amovible.

En pratique, dans la forme de réalisation représentée, l'enjoliveur 32 se présente sous la forme d'un cadre plat dont le contour intérieur 33, carré, a mêmes dimensions que celles du contour intérieur 28 du cadre plat 24 de façade du support d'appareillage 10, et dont le contour extérieur a au contraire sur tous ses côtés des dimensions légèrement supérieures à celles du contour extérieur de ce cadre plat 24, de manière à déborder de toute part de celui-ci lorsqu'il lui est appliqué.

En outre, dans cette forme de réalisation, l'enjoliveur 32 présente à son dos tout autour de son périmètre un bord tombé 34, figures 6 et 8, pour son emboîtement au moins partiel sur le cadre plat 24 du support d'appareillage 10.

Le support d'appareillage 10 présente, enfin, en façade, sur son cadre plat 24, au moins un perçage 35 propre à l'engagement d'un pion d'encliquetage 36 prévu en correspondance en saillie au dos de l'enjoliveur 32.

Dans la forme de réalisation représentée, il y a ainsi, en façade du support d'appareillage 10, quatre perçages 35, qui, disposés chacun respectivement au voisinage des angles du contour intérieur 28 du cadre plat 24, débouchent deux par deux dans les évidements 29 présents au dos de celui-ci.

Conjointement, l'enjoliveur 32 présente à son dos quatre pions d'encliquetage 36, et il s'agit en pratique de pions fendus axialement pour présenter transversalement une certaine élasticité.

Préférentiellement, leur extrémité est tronconique, pour en faciliter l'engagement dans un perçage 35.

Pour sa mise en oeuvre, et comme cela est usuellement le cas pour le couvercle 15, le support d'appareillage 10 suivant l'invention est par exemple engagé de l'avant sur les retours 13 d'un corps de goulotte 11, par deux opposés de ses côtés 19A, 19B, à la faveur des moyens de rainure 20 que présentent ceux-ci.

Cela suppose une déformation élastique temporaire du corps de goulotte 11, par simple écartement de ses ailes latérales 14.

En variante, cependant, le support d'appareillage 10 peut également être engagé sur ce corps de goulotte 11 à partir d'une de ses extrémités et être ensuite coulissé le long de celui-ci.

Quoi qu'il en soit, pour un corps de goulotte 11 auquel correspond la largeur de couvercle L1 la plus petite, le support d'appareillage 10 est ainsi engagé longitudinalement sur les retours 13 par ses côtés de plus grande longueur 19A, tel que représenté sur les figures 1 et 2.

Pour un corps de goulotte 11 correspondant à la largeur de couvercle L2 la plus grande, il est au contraire engagé transversalement sur ces retours 13, par ses côtés de plus petite longueur 19B, tel que représenté sur la figure 10.

Dans tous les cas, et tel que schématisé sur les figures 6 et 7 pour un côté de plus petite longueur 19B, les lamelles élastiquement déformables 30 des moyens de rainure 20 correspondants viennent porter élastiquement sur les retours 13 concernés au dos de ceux-ci en plaquant dès lors en façade le support d'appareillage 10 contre ces retours 13 par son cadre plat 24.

Le support d'appareillage 10 ainsi mis en place sur les retours 13 d'un corps de goulotte 11 peut par exemple se trouver abouté à un couvercle 15 sur l'un et/ou l'autre de ses côtés, tel que représenté sur les figures 1, 2 et 10.

L'enjoliveur 32 est alors rapporté de l'avant par encliquetage, et cet enjoliveur 32 vient ainsi avantageusement recouvrir les extrémités correspondantes des couvercles 15.

Mais, bien entendu, le support d'appareillage 10 peut tout aussi bien être abouté à un autre support d'appareillage 10 de même type sur l'un et/ou l'autre de ses côtés.

La présente invention ne se limite d'ailleurs pas aux formes de réalisation et de mise en oeuvre décrites et représentées, mais englobe toute variante d'exécution.

En particulier, l'enjoliveur associé au support d'appareillage suivant l'invention peut en variante faire partie intégrante de celui-ci, en étant d'un seul tenant avec lui, notamment s'il peut exister pour ce support d'appareillage et/ou pour le ou les couvercles auxquels il peut être abouté des capacités de coulissement relatif suffisantes sur le corps de goulotte sur lequel ils sont susceptibles d'être rapportés.

## Revendications

1. Support d'appareillage à rapporter sur le corps d'une goulotte à retours dirigés l'un vers l'autre, du genre comportant, sur deux côtés (19A) opposés, des moyens de rainure (20) propres à son engagement sur de tels retours (13) et caractérisé en ce qu'il comporte des moyens de rainure (20) propres à un tel engagement sur deux autres côtés (19B) qui, alternant avec les précédents, sont agencés en rectangle avec ceux-ci.

2. Support d'appareillage suivant la revendication 1, caractérisé en ce que, sur chacun des côtés (19A, 19B), les moyens de rainure (20) se trouvent définis par deux joues (21, 22) globalement parallèles, dont, une, au moins, la joue (21), la plus extérieure, s'étend sur toute la longueur d'un tel côté (19A, 19B) et appartient en continu à un cadre plat (24) de contour extérieur rectangulaire commun à l'ensemble.

3. Support d'appareillage suivant la revendication 2, caractérisé en ce que l'autre joue, la joue (22) la plus intérieure, est fractionnée en au moins deux tronçons, qui, disposés chacun respectivement aux extrémités du côté (19A, 19B) concerné, se raccordent chacun respectivement aux tronçons correspondants des côtés (19B, 19A) adjacents.

4. Support d'appareillage suivant l'une quelconque des revendications 1 à 3, caractérisé en ce que, sur l'un au moins des côtés (19A, 19B), il est prévu, dans les moyens de rainure (20), en saillie en direction de l'autre sur l'une au moins des joues (21, 22) définissant ces moyens de rainure (20), au moins une lamelle élastiquement déformable (30).

5. Support d'appareillage suivant la revendication 4, caractérisé en ce que la lamelle élastiquement déformable (30) est allongée longitudinalement par rapport aux joues (21, 22).

6. Support d'appareillage suivant la revendication 5, caractérisé en ce que la joue (22) la plus intérieure étant fractionnée en au moins deux tronçons, la lamelle élastiquement déformable (30) vient d'un seul tenant d'un tel tronçon en formant un prolongement de celui-ci.

7. Support d'appareillage suivant la revendication 6, caractérisé en ce que, à chaque lamelle élastiquement déformable (30), il est associé une autre lamelle élastiquement déformable (30) de même type mais de sens opposé.

8. Support d'appareillage suivant l'une quelconque des revendications 4 à 7, caractérisé en ce que, sur chacun des côtés (19A, 19B), il est prévu, dans les moyens de rainure (20), au moins une lamelle élastiquement déformable (30).

9. Support d'appareillage suivant l'une quelconque des revendications 1 à 8, caractérisé en ce qu'il lui est associé un enjoliveur (32) de dimensions extérieures supérieures aux siennes.

10. Support d'appareillage suivant la revendication 9, caractérisé en ce que l'enjoliveur (32) qui lui est associé est amovible et peut lui être rapporté de l'avant.

11. Support d'appareillage suivant la revendication 10, caractérisé en ce qu'il présente en façade au moins un perçage (35) propre à l'engagement d'un pion d'encliquetage (36) prévu en correspondance en saillie au dos de l'enjoliveur (32).

12. Support d'appareillage suivant l'une quelconque des revendications 1 à 8, caractérisé en ce que l'enjoliveur (32) qui lui est associé est d'un seul tenant avec lui.

## Patentansprüche

1. Geräteträger, der auf dem Körper eines Kabelkanals mit aufeinander zu gerichteten Abwinklungen anzubringen ist und auf zwei entgegengesetzten Seiten (19A) Nutmittel (20) besitzt, die sein Aufstecken auf solche Abwinklungen (13) gestatten, dadurch gekennzeichnet, daß er ein solches Aufstecken gestattende Nutmittel (20) auf zwei anderen Seiten (19B) besitzt, die mit den vorhergehenden abwechseln und mit diesen in einem rechten Winkel angeordnet sind.

2. Geräteträger nach Anspruch 1, dadurch gekennzeichnet, daß die Nutmittel (20) auf jeder der Seiten (19A, 19B) durch zwei global parallele Wangen (21, 22) abgegrenzt sind, von denen mindestens eine, und zwar die äußere Wange (21), sich über die ganze Länge einer solchen Seite (19A, 19B) erstreckt und durchgängig zu einem flachen Rahmen (24) mit einem der Einheit gemeinsamen rechtwinkligen Außenumriß gehört.

3. Geräteträger nach Anspruch 2, dadurch gekennzeichnet, daß die andere Wange, und zwar die innere Wange (22), in mindestens zwei Abschnitte geteilt ist, die jeweils an den Enden der betreffenden Seite (19A, 19B) angeordnet sind und jeweils an die entsprechenden Abschnitte der angrenzenden Seiten (19B, 19A) anschließen.

4. Geräteträger nach einem der Ansprüche 1 bis 3, dadurch gekennzeichnet, daß mindestens auf einer der Seiten (19A, 19B) in den Nutmitteln (20) mindestens eine elastisch verformbare Lamelle (30) vorgesehen ist, die auf mindestens einer der diese Nutmittel (20) abgrenzenden Wangen (21, 22) in Richtung der anderen hervorsteht.

5. Geräteträger nach Anspruch 4, dadurch gekennzeichnet, daß die elastisch verformbare Lamelle (30) bezüglich der Wangen (21, 22) in Längsrichtung gestreckt ist.

6. Geräteträger nach Anspruch 5, dadurch gekennzeichnet, daß, wenn die innere Wange (22) in mindestens zwei Abschnitte geteilt ist, die elastisch verformbare Lamelle (30) mit einem solchen Abschnitt einstückig ausgeführt ist, indem sie eine Verlängerung von diesem bildet.

7. Geräteträger nach Anspruch 6, dadurch gekennzeichnet, daß jeder elastisch verformbaren Lamelle (30) eine andere elastisch verformbare Lamelle (30) vom selben Typ, jedoch von entgegengesetzter Richtung, zugeordnet ist.

8. Geräteträger nach einem der Ansprüche 4 bis 7, dadurch gekennzeichnet, daß in den Nutmitteln (20) auf jeder der Seiten (19A, 19B) mindestens eine elastisch verformbare Lamelle (30) vorgesehen ist.

9. Geräteträger nach einem der Ansprüche 1 bis 8, dadurch gekennzeichnet, daß ihm eine Blende (32) mit größeren Außenabmessungen als die seinigen zugeordnet ist.

10. Geräteträger nach Anspruch 9, dadurch gekennzeichnet, daß die ihm zugeordnete Blende (32) abnehmbar ist und an ihm von vorne angebracht sein kann.

11. Geräteträger nach Anspruch 10, dadurch gekennzeichnet, daß er auf der Vorderseite mindestens eine Bohrung (35) für die Einführung eines Einrastzapfens (36) besitzt, der in Entsprechung auf der Rückseite der Blende (32) hervorsteht.

12. Geräteträger nach einem der Ansprüche 1 bis 8, dadurch gekennzeichnet, daß die ihm zugeordnete Blende (32) einstückig mit ihm ausgeführt ist.

## Claims

1. A support for an item of equipment, to be fitted to the body of a duct with flange portions directed towards each other, of the type comprising on two opposite sides (19A) groove means (20) for engagement thereof on such flange portions (13) and characterised in that it comprises groove means (20) for such engagement on two other sides (19B) which alternately with the preceding sides are arranged at a right angle to them.

2. A support for an item of equipment according to claim 1 characterised in that on each of the sides (19A, 19B) the groove means (20) are defined by two web portions (21, 22) which are overall parallel and of which one at least, the most outward web portion (21), extends over the entire length of such a side (19A, 19B) and belongs continuously to a flat frame (24) of rectangular external contour which is common to the assembly.

3. A support for an item of equipment according to claim 2 characterised in that the other web portion, the most inward web portion (22), is divided into at least two sections which, each disposed respectively at the ends of the side (19A, 19B) in question, are each respectively connected to the corresponding sections of the adjacent sides (19B, 19A).

4. A support for an item of equipment according to any one of claims 1 to 3 characterised in that on one at least of the sides (19A, 19B), provided in the groove means (20), in projecting relationship in the direction of the other on one at least of the web portions (21, 22) defining said groove means (20), is at least one elastically deformable tongue (30).

5. A support for an item of equipment according to claim 4 characterised in that the elastically deformable tongue (30) is elongate longitudinally with respect to the web portions (21, 22).

6. A support for an item of equipment according to claim 5 characterised in that the most inward web portion (22) being divided into at least two sections, the elastically deformable tongue (30) is in one piece with such a section, forming an extension thereof.

7. A support for an item of equipment according to claim 6 characterised in that associated with each elastically deformable tongue (30) is another elastically deformable tongue (30) of the same type but extending in the opposite direction.

8. A support for an item of equipment according to any one of claims 4 to 7 characterised in that at least one elastically deformable tongue (30) is provided on each of the sides (19A, 19B) in the groove means (20).

9. A support for an item of equipment according to any one of claims 1 to 8 characterised in that associated therewith is a decorative member (32) of outside dimensions which are greater than those of the support.

10. A support for an item of equipment according to claim 9 characterised in that the decorative member (32) which is associated therewith is removable and can be fitted thereto from the front.

11. A support for an item of equipment according to claim 10 characterised in that it has at the front at least one opening (35) for engagement of a latching pin (36) provided at a corresponding position in projecting relationship on the back of the decorative member (32).

12. A support for an item of equipment according to any one of claims 1 to 8 characterised in that the decorative member (32) which is associated therewith is in one piece therewith.
